# EUROPÄISCHE PATENTANMELDUNG

(11) **EP 1 607 174 A1**
(43) Veröffentlichungstag der Anmeldung: **21.12.2005**
(21) Anmeldenummer: 04013937.0
(22) Anmeldetag: 15.06.2004
(51) Int. Cl.: B23Q 3/155, B23Q 3/157

(54) **Vorrichtung zum Zu- und Abführen von Werkzeugen in ein/aus einem Werkzeugmagazin einer Werkzeugmaschine**

(71) Anmelder: Zimmer & Kreim GmbH & Co. KG, 64395 Brensbach (DE)
(72) Erfinder: Schepella, Adrian, 64823 Gross-Umstadt (DE); Ruppel, Roland, Dr.-Ing., 64395 Brensbach (DE); Kreim, Klaus, 64395 Brensbach (DE)
(74) Vertreter: Blumbach - Zinngrebe

(57) **Zusammenfassung**

Beschrieben wird eine Ablage- und Bestückungsvorrichtung für Werkzeuge mit einem Manipulator (10) für die Werkzeuge, mit wenigstens einer Werkzeugmaschine (1, 2) sowie mit einem eine Vielzahl von Lagerplätzen (56, 57, 58) für die Werkzeuge aufweisenden Lager (8), wobei die Lagerplätze auf mehrere übereinander angeordnete Reihen verteilt sind, und mit einer zentralen elektronischen Steuerung, welche den Manipulator veranlaßt, mittels eines quer zu einer Hochachse (40) sowie parallel zur Hochachse translatorisch bewegbaren Werkzeuggreifers (20, 33, 36) jeweils ein Werkzeug von der Werkzeugmaschine zu einem vorgegebenen Lagerplatz und umgekehrt zu transportieren, wobei der Manipulator vor den und parallel zu den geradlinigen Reihen bewegbar ist.

## Beschreibung

Die Erfindung betrifft eine Ablage- und Bestückungsvorrichtung für Werkzeuge mit einem Manipulator für die Werkzeuge, mit wenigstens einer Werkzeugmaschine, vornehmlich einer Elektroerosionsmaschine, sowie mit einem eine Vielzahl von Lagerplätzen für die Werkzeuge aufweisenden Lager, wobei die Lagerplätze auf mehrere übereinander angeordnete Reihen verteilt sind, und mit einer zentralen elektronischen Steuerung, welche den Manipulator veranlaßt, mittels eines quer zu einer Hochachse sowie parallel zur Hochachse translatorisch bewegbaren Werkzeuggreifers jeweils ein Werkzeug von der Werkzeugmaschine zu einem vorgegebenen Lagerplatz und umgekehrt zu transportieren.

Unter dem Begriff Werkzeug werden nicht nur Bohrer, Fräser, Elektroden verstanden sondern auch Träger derselben, mit denen sie fest verbunden sind, sowie runde oder rechteckige Paletten, auf denen entweder eines oder mehrere Werkzeuge oder von der Werkzeugmaschine zu bearbeitende Werkstücke befestigt sein können.

Um ein an der Werkzeugmaschine eingespanntes Werkstück mit mehreren verschiedenen Werkzeugen bearbeiten zu können, werden diese Werkzeuge an verschiedenen, vorbestimmten Lagerplätzen im Lager zur Verwendung bereitgehalten. Ist ein Bearbeitungsvorgang mit einem Werkzeug beendet, bewirkt die Steuerung, daß der Manipulator das Werkzeug aus dem Futter oder der Pinole der Werkzeugmaschine entnimmt und auf dem vorgesehenen Lagerplatz ablegt. Anschließend holt er das neue Werkzeug von einem anderen Lagerplatz ab und setzt es in die Werkzeugmaschine ein.

Meist stehen Werkzeugmaschine und Lager bezüglich des Manipulatiors einander gegenüber. Für den vorstehend beschriebenen Werkzeugwechselvorgang ist dann eine Drehung des Werkzeuggreifers um die Hochachse erforderlich. Für das Lager ist es bei solcher Anordnung wegen des nur begrenzten Ausfahrhubes des Werkzeuggreifers quer zur Hochachse üblich, den Manipulator an dessen äußerem Umfang kreisbogenförmig zu umgeben. Damit ist gewährleistet, daß der Werkzeuggreifer zur Ablage und/oder Entnahme eines Werkzeuges stets im wesentlichen gleichen Aus- und Einfahrhub durchläuft.

Nachteilig ist indes die nur beschränkte Aufnahmefähigkeit des Lagers für die bereitzuhaltenden Werkzeuge. Dieser Nachteil macht sich besonders dann störend bemerkbar, wenn eine Vielzahl von Paletten bereitzuhalten sind, die wegen ihrer Ausdehnung mehrere Lagerplätze belegen und damit die verfügbare Lagerkapazität einengen.

Der Erfindung liegt daher die Aufgabe zugrunde, die von dem Manipulator bedienbare Lagerkapazität zu erhöhen. Dazu dient die eingangs definierte Ablage- und Bestückungsvorrichtung, bei der der Manipulator vor den und parallel zu den geradlinigen Reihen der Lagerplätze bewegbar ist. Da sich damit das Lager in seitlicher Richtung geradlinig erstrecken kann, unterliegt seine seitliche Ausdehnung prinzipiell keinen Beschränkungen. Seine Kapazität kann daher frei nach den jeweiligen Bedürfnissen gewählt werden. Sind beispielsweise viele und große Paletten zu bevorraten, wird seine seitliche Ausdehnung vergrößert. Dabei empfiehlt es sich, das Lager aus mehreren einzelnen Abteilungen bestehen zu lassen, die lösbar miteinander verbunden werden können und vor denen der Manipulator translatorisch bewegt werden kann.

Zweckmäßig ist der Manipulator auf geraden Schienen geführt, die sich vor den Reihen erstrecken. Weiter ist vorteilhaft, wenn parallel zu den Schienen ein langgestreckter Positionsgeber angeordnet ist, welcher für jeweils übereinander befindliche Lagerplätze eine Markierung trägt und mit einem Positionsfühler am Manipulator zusammenwirkt. Der Positionsgeber kann magnetisierbar und entsprechend den einzelnen Positionen magnetisch kodiert sein. Darüber hinaus kann der Positionsfühler einen im Manipulator vorgesehenen Linearantriebsmotor steuern. In einer anderen Ausführungsform der Erfindung ist dem Linearantriebsmotor ein Resolver vorgeschaltet, der eine vom Manipulator anzufahrende Sollposition des Lagers in eine Aktivierungszeitspanne für den Linearantriebsmotor umsetzt, sodaß letzterer den Manipulator an die Sollposition bewegt. In dieser Ausführungsform ist der langgestreckte Positionsgeber und der zugeordnete Positionsfühler durch den Resolver ersetzt.

Der Werkzeuggreifer ist zweckmäßig um die Hochachse drehbar, sodaß das Lager und die Werkzeugmaschine bezüglich des Manipulators einander gegenüberstehen können. Sind zwei benachbarte Werkzeugmaschinen vorgesehen, können der Manipulator und das Lager mit Vorteil zwischen beiden Maschinen angeordnet werden. In einer noch einfacheren Gestaltung der Erfindung ist das Lager neben einer Werkzeugmaschine angeordnet, wobei der Manipulator auf den Schienen vor der Werkzeugmaschine und dem Lager translatorisch bewegbar ist. Im übrigen sind vorteilhafte Ausführungsformen der Erfindung in den abhängigen Ansprüchen angegeben.

Die Erfindung wird nachstehend anhand der beigefügten Zeichnung im einzelnen beschrieben. Es zeigen:
- Figur 1:: eine schematische perspektivische Draufsicht auf eine Ablage- und Bestückungsvorrichtung mit zwei Werkzeugmaschinen, einem Manipulator und einem drei Abteilungen aufweisenden Lager;
- Figur 2:: eine schematische Frontalansicht des Lagers aus Figur 1 mit Manipulator;
- Figur 3:: eine schematische Draufsicht auf eine von Figur 1 abweichende Anordnung von Werkzeugmaschinen, Lager und Manipulator;
- Figur 4:: eine schematische perspektivische Ansicht des Manipulators;
- Figur 5:: eine schematische, vergrößerte, Draufsicht auf die Manipulatorbasis;
- Fig. 6 und 7:: schematische, perspektivische Ausschnittsansichten des Manipulatorturmes mit zwei verschiedenen Werkzeuggreifern.

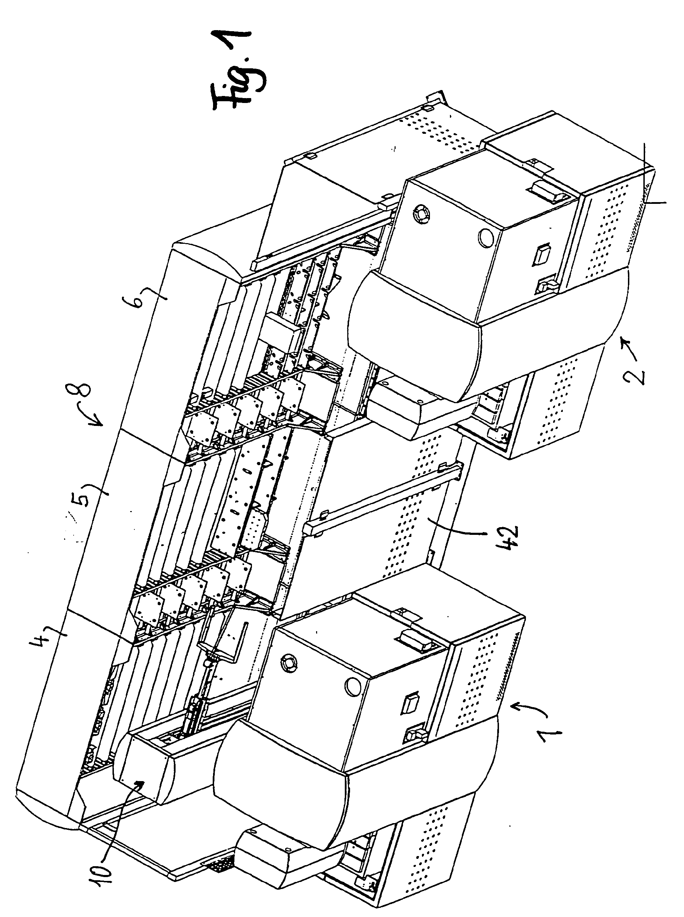

Die erfindungsgemäße Ablage- und Bestückungsvorrichtung ist gemäß Figur 1 in eine Werkstückbearbeitungsanlage integriert, welche im dargestellten Ausführungsbeispiel zwei benachbarte Elektroerosionsmaschinen 1, 2, drei nebeneinander angeordnete Abteilungen 4, 5, 6 eines insgesamt mit 8 bezeichneten Lagers und einen zwischen Lager 8 und den Elektroerosionsmaschinen 1, 2 verfahrbaren Manipulator 10 aufweist. Die an sich bekannten Elektroerosionsmaschinen 1, 2 besitzen jeweils eine nicht dargestellte Pinole, in welche von unten ein gegebenenfalls an einem Träger befestigtes Werkzeug eingebracht und angespannt und aus welcher nach dem Entspannen das Werkzeug nach unten entnommen werden kann.

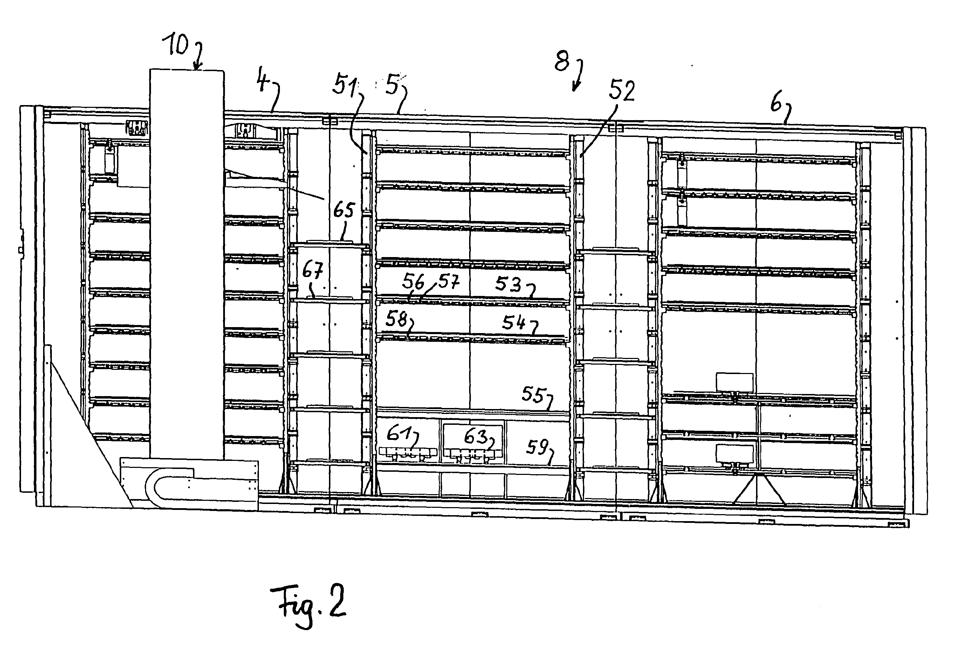

Das vertikale, geradlinige und feststehende Lager 8 weist drei an ihren Stirnseiten fluchtend und lösbar miteinander verbundene, beispielsweise verschraubte Abteilungen 4, 5, 6 auf, von denen jede gemäß Figur 2 mehrere übereinander angeordnete Reihen von Lagerplätzen umfaßt. Dazu besitzt etwa die Abteilung 5 zwei in Längsrichtung des Lagers 8 beabstandete Seitenplatten 51, 52, an denen mehrere vertikalen Abstand aufweisende parallele Leisten befestigt sind. Drei dieser Leisten sind mit 53, 54, 55 bezeichnet. Nicht alle Leisten haben gleichen vertikalen Abstand: der Abstand der Leisten 53 und 54 ist wesentlich kleiner als derjenige der Leisten 54 und 55. Der vertikale Abstand der Leisten ist im übrigen veränderbar, da die Leisten in unterschiedlichen Höhen an den Seitenplatten 51, 52 befestigt werden können.

Jede Leiste besitzt mehrere nebeneinander angeordnete, eine Reihe bildende Lagerplätze, von denen zwei an der Leiste 54 mit 56, 57, und einer an der Leiste 53 mit 58 bezeichnet sind. Alle Lagerplätze der einzelnen Reihen bzw. Leisten sind vertikal aufeinander ausgerichtet. So liegt beispielsweise der Lagerplatz 56 der Leiste 53 genau über dem Lagerplatz 58 der Leiste 54. Es empfiehlt sich, seitlich benachbarte Lagerplätze in jeder Reihe gleich zu beabstanden. Andererseits kann auch der eine oder andere Lagerplatz entfallen, um etwa neben einem Lagerplatz hinreichend Raum freizuhalten. Jeder Lagerplatz besitzt die Form eines nach vorne offenen klauenartigen Mundstückes, in welches beispielsweise der Halter eines Werkzeugs durch einen noch zu beschreibenden Werkzeuggreifer des Manipulators 10 positionsgenau eingefügt werden kann. Größere Paletten können dagegen vom Werkzeuggreifer auf der Leiste 55 in definierter Position abgesetzt werden, wie das für die Paletten 61, 63 auf der untersten Leiste 59 in Figur 2 angedeutet ist.

Die Abteilungen 4 und 6 gleichen der Abteilung 5 bis darauf, daß der vertikale Abstand der in diesen Abteilungen vorhandenen Leisten ein anderer sein kann. Zwischen den benachbarten Seitenplatten zweier miteinander verbundener Abteilungen 4, 5 und 5, 6 sind Zwischenböden eingefügt, wie beispielsweise die Zwischenböden 65, 67, auf denen ebenfalls Paletten abgesetzt werden können.

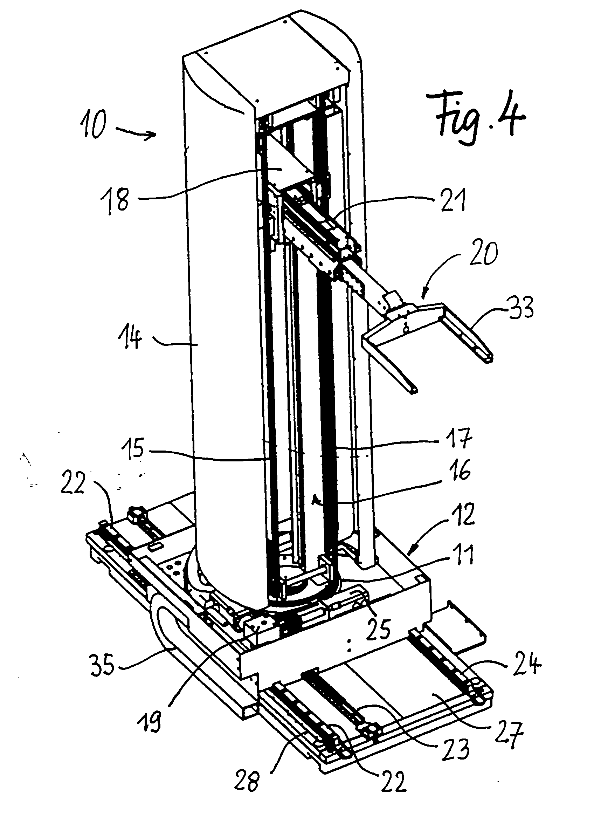

Gemäß Figur 4 weist der Manipulator eine Basis 12 und einen auf dieser um die Hochachse schwenkbar befestigten Turm 14 auf. In dem Turm 14 befindet sich ein vertikaler Aufzug 16, in dessen gegenüberliegende Zahnriemen 15, 17 ein Käfig 18 für einen Werkzeuggreifer 20 eingehängt ist. Der Käfig 18 ist in nicht dargestellten Vertikalführungen geführt. Der Werkzeuggreifer 20 ist am vorderen Ende eines Greiferschlittens 21 befestigt, welcher mittels eines nicht dargestellten Antriebs aus dem Käfig 18 im wesentlichen horizontal aus- und einfahrbar ist.

In der Basis 12 ist im wesentlichen mittig eine kreisrunde Platte 11 (Figur 5) drehbar befestigt, deren Drehachse gleichzeitig die Hochachse 40 ist. In den Umfang der Platte 11 greift ein Zahnriemen 13 ein, welcher von einem Drehmotor 19 hin und her gezogen werden kann mit dem Effekt, daß sich die Platte 11 mit dem auf ihr befestigten Turm 14 entsprechend im Uhrzeigersinn oder gegen denselben dreht.

Die Basis 12 ruht über Rollen oder Kuven auf zwei beabstandeten Schienen 22, 24, welche sich geradlinig mit festem Abstand parallel zu den mit den Lagerplätzen versehenen Leisten erstrecken. Auf der Basis 12 ist ein umstellbarer Linearantriebsmotor 25 befestigt, dessen Abtriebsreibrolle 26 eine Öffnung in der Basis 12 durchgreift und mit einer sich zwischen den Schienen 22, 24 und parallel zu diesen unterhalb der Basis 12 erstreckenden Antriebsschiene 23 in Eingriff steht. Statt der Antriebsschiene kann auch eine gespannte ortsfeste Kette vorgesehen sein, wobei dann die Abtriebsreibrolle 26 ein in die Kette praktisch spielfrei eingreifendes Ritzel ist. Damit basieren die Linearbewegung des Manipulators, die Aufzugbewegung des Käfigs, die Teleskopbewegung des Werkzeugschlittens 21 und die Drehbewegung des Manipulators auf nahezu spielfreien Kettentrieben, was besondere Vorteile bringt.

Längs der Außenseite der Schiene 22 ist ein Positionsgeber 28 in Form einer magnetisierbaren Schiene auf dem Schienenbett 27 befestigt, das aus mehreren hintereinander steckbaren Abschnitten bestehen kann, von denen jeder die Länge etwa einer der Abteilungen 4 oder 5 oder 6 aufweisen kann. Der Positionsgeber 28 ist entsprechend den Positionen vertikal übereinander befindlicher Lagerplätze magnetisch kodiert. So ist beispielsweise die Lage einer bestimmten Markierung auf dem Positionsgeber 28 durch die genaue Lage der Lagerplätze 56 und 58 sowie aller weiterer vertikal über oder unter den Lagerplätzen 56 und 58 befindlichen Lagerplätze in Richtung der Schienen 22, 24 vorgegeben. Für diejenigen Positionen, an denen Paletten oder andere größere Teile abgelegt werden können, wie beispielsweise für die Paletten 61 und 63 auf der Leiste 59, sind auf dem Positionsgeber 28 gesonderte Markierungen kodiert.

An der Basis 12 ist ferner ein Positionsfühler 29 in der Nähe des Positionsgebers 28 befestigt, welcher dazu bestimmt ist, die Kodierungen auf dem Positionsgeber 28 abzulesen und in entsprechende elektrische Signale umzusetzen, welche den Linearantriebsmotor 25 entweder direkt oder über die nicht dargestellte elektronische Steuerung im Sinne einer Vorwärts- oder Rückwärtsbewegung des Manipulators längs der Schienen 22, 24 steuern.

In einer anderen Ausführungsform sind der Positionsgeber 28 und der Positionsfühler 29 durch einen dem Linearantriebsmotor 25 vorgeschalteten Resolver 45 ersetzt. Der Resolver 45 nimmt aus der elektronischen Steuerung beispielsweise ein Positionssignal auf, welches für die von dem Manipulator 10 vor dem Lager 8 anzufahrende Sollposition charakteristisch ist. Aus diesem Positionssignal bildet der Resolver mit einem für die aktuelle Istposition des Manipulators 10 charakteristischen Istsignal eine Differenz, welche die Drehrichtung (Vorzeichen der Differenz) und Zeitspanne (Größe der Differenz) der Aktivierung des Linearantriebsmotors bestimmt. Das Differenzsignal führt der Resolver 45 dem Linearantriebsmotor 25 zu dessen Aktivierung zu. Darüberhinaus führt der Resolver 45 noch andere Signalverarbeitungen durch, die für das Verständnis der Erfindung jedoch von geringerer Bedeutung sind.

Selbstverständlich sind alle Koordinaten (Positionen) der Lagerplätze, das sind die z-Koordinaten parallel zur Hochachse, die x-Koordinaten längs der Schienen und die y-Koordinaten, die den Aus- und Einfahrhub des Werkzeuggreifers 20 bestimmen, sowie der leeren Lagerplätze, die zur Ablage eines Werkzeugs bereit sind, und der besetzten Lagerplätze sowie die Koordinaten der jeweils zu bedienenden Pinole in der zentralen elektronischen Steuerung gespeichert, sodaß ein von dieser gesteuerter Wechselvorgang mit den vorstehend erläuterten Mitteln automatisch ablaufen kann. Ferner ist klar, daß der Antrieb des Aufzugs 16, der Antrieb des Greiferschlittens 21, der Drehmotor 19 und der Linearantriebsmotor 25 von der elektronischen Steuerung zum programmgemäßen Zeitpunkt und im programmgemäßen Sinne aktiviert und deaktiviert werden. Jedenfalls enthält ein neben der Schiene 22 (oder 24) auf dem Schienenbett 27 verlegtes biegbares Kabel 35 Energieversorgungsleitungen sowie Steuersignalleitungen für den Manipulator 10, die mit den einzelnen Antrieben im Manipulator 10 verbunden sind. Es liegt jedoch auch im Rahmen der Erfindung, den Manipulator mit einer lokalen, eigenen Steuereinheit auszurüsten.

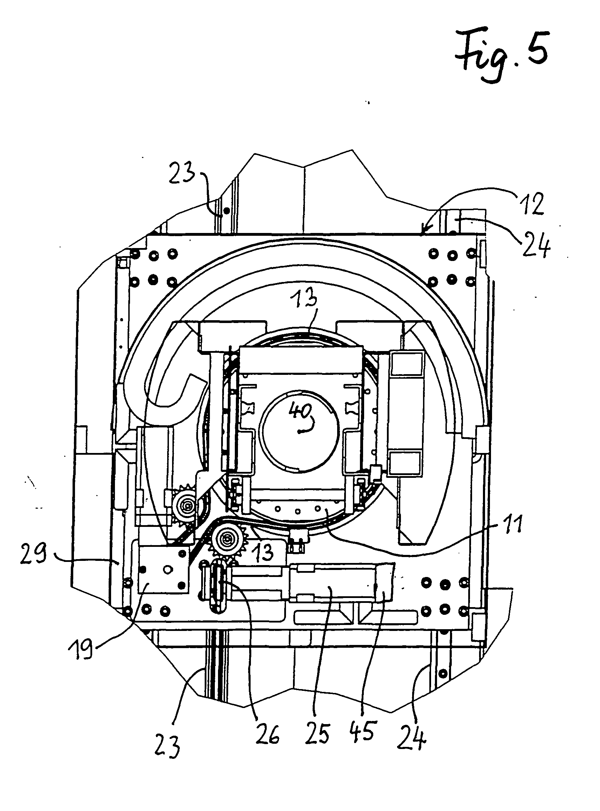

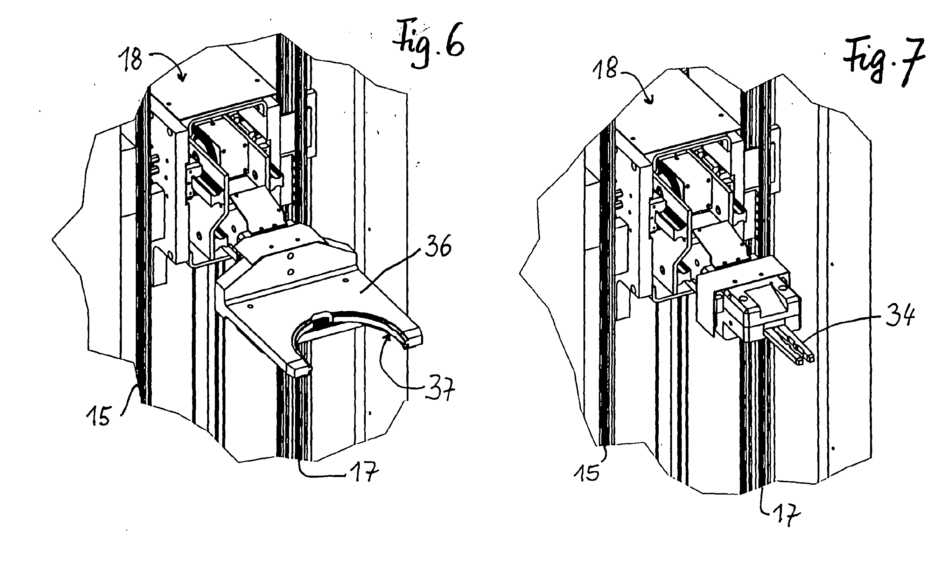

Der Werkzeuggreifer kann verschiedene Formen haben: Figur 6 zeigt einen Greifer 36 mit im wesentlichen kreisförmigem, nach vorne offenen Ausschnitt 37, mit welchen scheibenförmige Paletten oder Werkstücke ergriffen und transportiert werden können. In Figur 7 ist ein zangenartiger Greifer 34 dargestellt, welcher zum Ergreifen von Zugbolzen, an denen Werkzeuge oder Werkstücke befestigt sind, erfaßt werden können. Die Manipulation von rechteckigen Paletten gelingt am besten mit einem U-förmigen Greifer 33, wie schematisch Figur 4 zeigt.

Die Erfindung ist auf die spezielle Anordnung von Elektroerosionsmaschinen 1, 2, Lager 8 und Manipulator 10 zueinander gemäß Figur 1 nicht beschränkt. Zwischen den Maschinen 1 und 2 ist in Figur 1 eine Schutzwand 42 befestigt. Wird nur mäßige oder geringere Lagerkapazität benötigt, kann anstelle der Schutzwand 40 ein kleineres Lager, beispielsweise nur die Abteilung 4 zwischen den Maschinen 1 und 2 angeordnet werden. In diesem Falle können die y-Koordinaten der Pinolen sowie diejenigen der Lagerplätze so ausgelegt werden, daß auf ein Schwenken des Manipulatorturmes 14 verzichtet werden kann. Es genügt, daß der Manipulator 10 vor den Pinolen der Maschinen 1 und 2 sowie den Lagerplätzen der Abteilung 4 hin und her fahren kann. Die Erfindung kann auch in einer noch einfacheren Gestaltung ausgeführt werden, gemäß welcher nur eine einzige Werkzeugmaschine 1 und neben ihr ein aus einer oder mehreren Abteilungen bestehendes Lager vorgesehen sind, wobei auch hier, wie vorstehend ausgeführt, der Manipulator 10 auf Schienen 22, 24 und mit Kette 23 vor der Werkzeugmaschine 1 und Lager translatorisch beweglich ist.

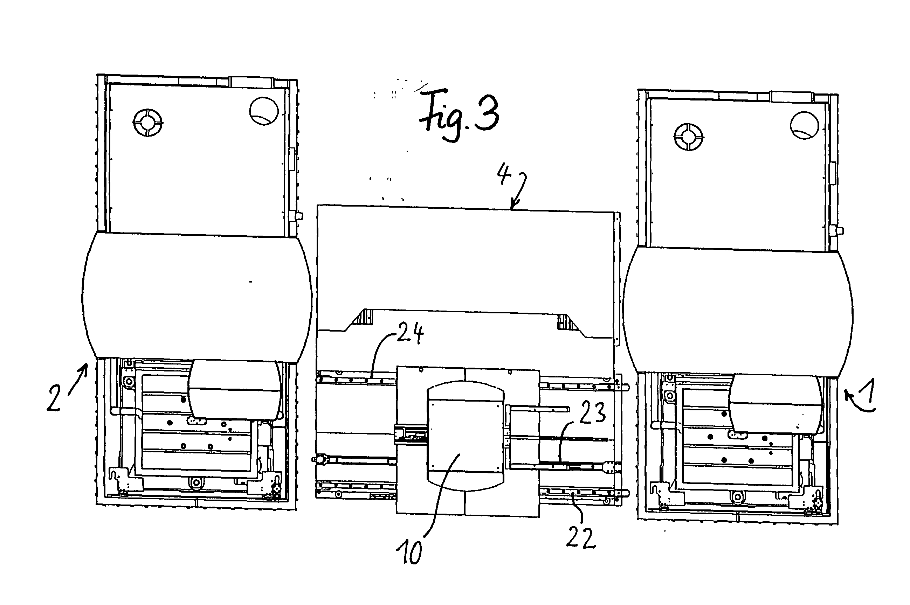

Schließlich zeigt Figur 3 eine Ausführungsform der Erfindung, bei welcher der Manipulator 10 mit Schienen 22, 23, 24 und die Lagerabteilung 4 zwischen den beiden Elektroerosiosmaschinen 1 und 2 aufgestellt sind. Da der Manipulator 10 bei dieser Anordnung nicht vor den Maschinen 1 und 2 und deren Pinolen vorfährt sondern neben sie anfährt, ist die Möglichkeit, eine Schwenkbewegung des Manipulators 10 um die Hochachse vorzusehen, zweckmäßig. Im übrigen sind mit der Erfindung Transfermassen, also Werkzeug- und/oder Palettenmassen bis etwa 120 kg oder mehr vom Manipulator transportierbar.

## Patentansprüche

1. Ablage- und Bestückungsvorrichtung für Werkzeuge mit einem Manipulator (10) für die Werkzeuge, mit wenigstens einer Werkzeugmaschine (1, 2) sowie mit einem eine Vielzahl von Lagerplätzen (56, 57, 58) für die Werkzeuge aufweisenden Lager (8), wobei die Lagerplätze auf mehrere übereinander angeordnete Reihen verteilt sind, und mit einer zentralen elektronischen Steuerung, welche den Manipulator veranlaßt, mittels eines quer zu einer Hochachse (40) sowie parallel zur Hochachse translatorisch bewegbaren Werkzeuggreifers (20, 33, 36) jeweils ein Werkzeug von der Werkzeugmaschine zu einem vorgegebenen Lagerplatz und umgekehrt zu transportieren, wobei der Manipulator vor den und parallel zu den geradlinigen Reihen bewegbar ist.

2. Vorrichtung nach Anspruch 1, **dadurch gekennzeichnet, daß** der Werkzeuggreifer um die Hochachse (40) schwenkbar ist.

3. Vorrichtung nach Anspruch 1 oder 2, **dadurch gekennzeichnet, daß** der Manipulator auf geraden Schienen (22, 24) geführt ist, die sich vor den Reihen erstrecken.

4. Vorrichtung nach einem der vorstehenden Ansprüche, **dadurch gekennzeichnet, daß** parallel zu den Schienen ein langgestreckter Positionsgeber (28) angeordnet ist, welcher für jeweils übereinander befindliche Lagerplätze (56, 58) eine Markierung trägt und mit einem Positionsfühler (29) am Manipulator (10) zusammenwirkt.

5. Vorrichtung nach Anspruch 4, **dadurch gekennzeichnet, daß** der magnetisierbare Positionsgeber entsprechend den einzelnen Positionen magnetisch kodiert ist.

6. Vorrichtung nach einem der vorstehenden Ansprüche, **dadurch gekennzeichnet, daß** der Manipulator einen Linearantriebsmotor (25) aufweist, der von dem Positionsfühler (29) gesteuert ist.

7. Vorrichtung nach einem der Ansprüche 1 bis 3, **dadurch gekennzeichnet, daß** der Manipulator (10) einen elektrisch gesteuerten Linearantriebsmotor (25) aufweist, dessen Abtriebsritzel (29) in eine sich parallel zu den Schienen (22, 24) ortsfest erstreckende Kette (23) eingreift.

8. Vorrichtung nach Anspruch 7, **dadurch gekennzeichnet, daß** dem Linearantriebsmotor (25) ein Resolver (45) vorgeschaltet ist, welcher durch Kombination von Istpositionssignalen des Manipulators mit von einer Steuerung aufgenommenen Sollpositionssignalen für den Manipulator die erforderliche Aktivierung des Linearantriebsmotors (25) hinsichtlich dessen Drehrichtung und Zeitspanne der Aktivierung veranlaßt.

9. Vorrichtung nach einem der vorstehenden Ansprüche, **dadurch gekennzeichnet, daß** das Lager (8) aus mehreren miteinander lösbar verbundenen und nebeneinander angeordneten Abteilungen (4, 5, 6) besteht.

10. Vorrichtung nach einem der Ansprüche 2 bis 9, **dadurch gekennzeichnet, daß** das Lager und die Werkzeugmaschine sich auf gegenüberliegenden Seiten des Manipulators befinden.

11. Vorrichtung nach einem der Ansprüche 1 bis 9, **dadurch gekennzeichnet, daß** das Lager sich zwischen zwei benachbarten Werkzeugmaschinen befindet.

12. Vorrichtung nach Anspruch 11, **dadurch gekennzeichnet, daß** sich der Manipulator zwischen zwei benachbarten Werkzeugmaschinen (1, 2) befindet.

13. Vorrichtung nach einem der vorstehenden Ansprüche, **dadurch gekennzeichnet, daß** das aus einer oder gegebenenfalls mehreren Abteilungen bestehende Lager neben nur einer Werkzeugmaschine (1) angeordnet ist, und der Manipulator (10) vor der Werkzeugmaschine und dem Lager translatorisch und ein Manipulatorturm (14) bevorzugt auch rotatorisch bewegbar sind.

14. Vorrichtung nach einem der Ansprüche 3 bis 13, **dadurch gekennzeichnet, dass** die Schienen (22, 24) auf einem Schienenbett (27) befestigt sind, welches aus mehreren hintereinander steckbaren Abschnitten besteht, deren Länge etwa gleich der Länge einer der Abteilungen (4, 5, 6) des Lagers (8) ist.

## Geänderte Patentansprüche

### Geänderte Patentansprüche gemäss Regel 86(2) EPÜ.

**1.** Ablage- und Bestückungsvorrichtung für Werkzeuge (61, 63) mit wenigstens einer Werkzeugmaschine (1, 2), mit einem regalartigen, feststehenden Lager (8), welches eine Vielzahl von über mehrere übereinander angeordnete Reihen verteilten Lagerplätzen (56, 57, 58) für die Werkzeuge aufweist, sowie mit einem einen Werkzeuggreifer (20) für ein Werkzeug aufweisenden, vor und parallel zu den geradlinigen Reihen (53, 54, 55) verfahrbaren Manipulator (10), wobei der Werkzeuggreifer längs einer Hochachse (40) des Manipulators sowie quer zur Hochachse translatorisch beweglich ist und mit einer elektronischen Steuerung, **dadurch gekennzeichnet, dass** die Werkzeugmaschine, der Manipulator und das Lager konstruktiv selbständige Einheiten sind, wobei die zentrale Steuerung den Manipulator veranlasst, jeweils ein Werkzeug von der Werkzeugmaschine zu einem vorgegebenen Lagerplatz und umgekehrt zu transportieren.
